# EUROPÄISCHE PATENTANMELDUNG

(11) **EP 0 820 826 A1**
(43) Veröffentlichungstag der Anmeldung: **28.01.1998**
(21) Anmeldenummer: 96810495.0
(22) Anmeldetag: 25.07.1996
(51) Int. Cl.: B23C 5/10, B23B 51/12

(54) **Verlängerungshülse für ein Bearbeitungswerkzeug**

(71) Anmelder: FRAISA SA, 4512 Bellach (CH)
(72) Erfinder: Flury, Daniel, 4513 Langendorf (CH); Haberkorn, Willy, 41849 Wassenberg (DE)
(74) Vertreter: Patentanwälte Breiter + Wiedmer AG

(57) **Zusammenfassung**

Bei einer Verlängerungshülse (10) für ein Bearbeitungswerkzeug (30) zum Einspannen in eine Spindel einer Bearbeitungsmaschine ist das Bearbeitungswerkzeug über einen Schaft (34) in die Hülse einsetzbar. Hierbei ist der Schaft (34) von einem Halterungsteil (16) der Hülse (10) übergreifbar und in dieser verdrehsicher fixierbar. Der Halterungsteil (16) und der Schaft (34) weisen je eine symmetrisch zur Hülsen- bzw. Schaftachse (x) liegende konische Fläche (20,36) auf. Die konischen Flächen (20,36) sind mittels einer in Achsenrichtung (x) wirkenden Schraube (26) unter Ausbildung einer Reibschlussverbindung gegeneinander verspannbar.

## Beschreibung

Die Erfindung betrifft eine Verlängerungshülse für ein Bearbeitungswerkzeug zum Einspannen in eine Spindel einer Bearbeitungsmaschine, mit einem über einen Schaft in die Hülse einsetzbaren Bearbeitungswerkzeug, wobei der Schaft von einem Halterungsteil der Hülse übergreifbar und in dieser verdrehsicher fixierbar ist.

Zur Vergrösserung der Bearbeitungstiefe von Zerspanungswerkzeugen ist es bekannt, den Werkzeugschaft in einer Verlängerungshülse zu fixieren und das Werkzeug über die Hülse in die Spindel der Bearbeitungsmaschine einzuspannen. Bei herkömmlichen Verlängerungshülsen erfolgt die Fixierung des Werkzeuges in der Hülse über eine die Hülse durchdringende Schraube, die im angezogenen Zustand einer in den Schaft eingearbeiteten Spann- oder Mitnehmerfläche aufliegt. Bei einer anderen bekannten Fixierart wird in eine seitliche Bohrung in der Hülse ein Keilelement eingelegt und gegen eine Spannfläche am Werkzeugschaft verspannt.

Ein wesentlicher Nachteil der vorstehend erwähnten Verbindungen zwischen Bearbeitungswerkzeug und Verlängerungshülse liegt in deren asymmetrischem Aufbau. Insbesondere bei der Anwendung hoher Drehzahlen kann das Werkzeug schon nach kurzer Betriebsdauer durch Unwucht aus seinem festen Sitz in der Hülse gelöst werden oder sogar das zu bearbeitende Werkstück beschädigen.

Der Erfindung liegt daher die Aufgabe zugrunde, eine Verlängerungshülse der eingangs genannten Art zu schaffen, in welcher der Schaft eines Bearbeitungswerkzeuges auf einfache Art verdrehsicher fixiert werden kann, ohne dass bei hohen Drehzahlen Unwuchtprobleme auftreten.

Zur erfindungsgemässen Lösung der Aufgabe führt, dass das Halterungsteil und der Schaft je eine symmetrisch zur Hülsen- bzw. Schaftachse liegende konische Fläche aufweisen und die konischen Flächen mittels einer in Achsenrichtung wirkenden Schraube unter Ausbildung einer Reibschlussverbindung gegeneinander verspannbar sind.

Bei der erfindungsgemäss symmetrisch zur Hülsenachse angeordneten Reibschlussverbindung kann die bei üblichen Formschlussverbindungen wegen ihres asymmetrischen Aufbaus bewirkte Unwucht nicht auftreten.

Bevorzugt sind die konischen Flächen über eine Federkraft verspannbar. Die Federkraft kann beispielsweise durch eine besondere Ausgestaltung der Schraube oder durch ein integral angeformtes oder ein separat angeordnetes Federelement erzeugt werden.

Mit diesen letztgenannten Massnahmen ergeben sich Reibschlussverbindungen mit konstanter Anpresskraft. Durch die konische Ausbildung der Auflageflächen an der Hülse und am Werkzeugschaft bleibt das Werkzeug auch unter der während der Bearbeitung auftretenden Wäremeinwirkung zentriert, wobei die als Folge einer Wäremdehnung auftretenden Verschiebungen des Werkzeuges in Achsenrichtung Ober die Federkraft ausgeglichen werden und somit der Kraftschluss erhaltenbleibt.

Bei einer ersten Ausführungsform der erfindungsgemässen Verlängerungshülse laufen die konischen Flächen gegen die Werkzeughalterseite der Hülse zu und die Reibschlussverbindung wird über eine von der Maschineneinspannseite in die Hülse einschraubbare Spannschraube erzeugt.

Zweckmässig wird zur Kraftübertragung auf das Bearbeitungswerkzeug zwischen Spannschraube und Schaft ein Verlängerungsbolzen in die Hülse eingesetzt, wobei zwischen Spannschraube und Schaft bzw. zwischen Spannschraube und Verlängerungsbolzen bevorzugt mindestens ein Federelement, vorzugsweise mindestens eine Hochspannungssicherungsscheibe oder Tellerfeder, in die Hülse eingesetzt wird.

Bei einer weiteren Ausführungsvariante der erfindungsgemässen Verlängerungshülse laufen die konischen Flächen gegen die Maschineneinspannseite der Hülse zu und die Reibschlussverbindung wird über eine mit dem Schaft verschraubbare und auf der Maschineneinspannseite an der Hülse gegengelagerte Schraube erzeugt. Bevorzugt ist die Schraube eine Dehnschraube und gleicht die oben erwähnten Längenänderungen infolge Wärmeausdehnung selbsttätig aus, wobei zwischen Schraube und einer Auflagefläche in der Hülse zusätzlich noch mindestens ein Federelement eingesetzt werden kann.

Der Konuswinkel, d.h. der Winkel, den die konischen Flächen mit der Hülsen- bzw. Schaftachse bilden, liegt bevorzugt zwischen etwa 1 und 90°, insbesondere zwischen etwa 5 und 15°.

Ein bevorzugter Anwendungsbereich der erfindungsgemässen Verlängerungshülse liegt beim Einspannen von Fräsern, Bohrern, Gewindeschneidern und dgl. in eine Spindel einer Bearbeitungsmaschine.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: einen Längsschnitt durch eine Verlängerungshülse für ein Fräswerkzeug;
- Fig. 2: eine Seitenansicht eines Fräswerkzeuges;
- Fig. 3: einen Längsschnitt durch die Verlängerungshülse von Fig. 1 mit dem eingebauten Fräswerkzeug von Fig. 2;
- Fig. 4: einen Längsschnitt durch eine andere Ausführungsart einer Verlängerungshülse;
- Fig. 5: einen Längsschnitt durch eine Passdehnschraube zum Einsetzen in die Verlängerungshülse von Fig. 4;
- Fig. 6: eine Seitenansicht eines Fräswerkzeuges zum Einsetzen in die Verlängerungshülse von Fig. 4.

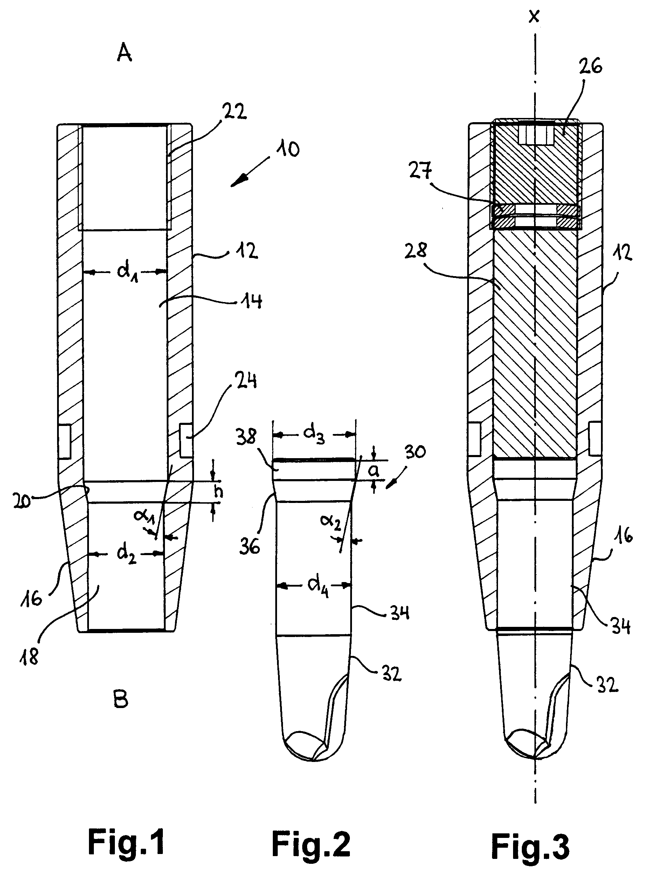

Eine in Fig. 1 dargestellte Verlängerungshülse 10 zum Einspannen in eine aus Gründen der besseren Uebersicht in der Zeichnung nicht wiedergegebene Spindel einer Fräsmaschine weist ein rohrförmiges Verlängerungsteil 12 mit einer ersten zylinderförmigen Bohrung 14 auf. An den Verlängerungsteil 12 schliesst ein gegen das Hülsenende konisch sich verjüngender Halterungsteil 16 mit einer zweiten zylindrischen Bohrung 18 an. Die beiden Bohrungen 14, 18 sind konzentrisch zur Hülsen- oder Werkzeugachse x angeordnet und über einen konischen Uebergangsteil 20 miteinander verbunden. Hierbei verjüngt sich der Konus gegen den Halterungsteil 16 hin, d.h. der Durchmesser d₂ der Bohrung 18 des Halterungsteils 16 ist kleiner als der Durchmesser d₁ der Bohrung 14 des Verlängerungsteils 12. Bei Durchmessern d₁,d₂ von beispielsweise 20 bzw. 18 mm beträgt die Höhe h z.B. etwa 5 mm und der Konuswinkel α₁ z.B. etwa 10°.

Die Verlängerungshülse 10 dient als Verlängerung für ein in Fig. 2 gezeigtes Fräzwerkzeug 30. Dieses weist einen Schaft 34 auf, an dessen einem Ende sich das eigentliche Fräs- oder Bearbeitungsteil 32 befindet. Das andere Ende des zylinderförmigen Schaftes 34 ist zu einem Konusteil 36 erweitert, der in ein zylinderförmiges Auflageteil 38 einer Höhe a von beispielsweise 5 mm übergeht. Die Durchmesser d₃ bzw. d₄ des Auflageteils 38 bzw. Schaftes 34 entsprechen den Durchmessern d₁ bzw. d₂ der Bohrungen 14, 18 der Verlängerungshülse 10. Ebenso entspricht der Konuswinkel α₂ des Konusteils 36 dem Konuswinkel α₁ des konischen Uebergangsteils 20.

Der Zusammenbau von Fräswerkzeug 30 und Verlängerungshülse 10 ergibt sich aus der Betrachtung von Fig. 3.

Das Fräswerkzeug 30 wird von der Maschinenaufspannseite A der Verlängerungshülse 10 in das Verlängerungsteil 12 eingeführt und bis zum passgenauen Sitz auf der Werkzeughalterseite B in das Halterungsteil 16 eingesetzt. Ein in die Bohrung 14 des Verlängerungsteils 12 eingesetzter und in diesem mit minimalem Spiel geführter Verlängerungsbolzen 28 liegt dem Auflageteil 38 des Fräswerkzeuges 30 stirnseitig an. Eine Spannschraube 26 wird von der Maschineneinspannseite A in das rohrförmige Verlängerungsteil 12, welches mit einem entsprechenden Innengewinde 22 versehen ist, eingeschraubt.

Zwischen der Spannschraube 26 und der gegen die Maschineneinspannseite A weisenden Stirnfläche des Verlängerungsbolzens sind beispielsweise zwei Hochspannungssicherungsscheiben oder Tellerfedern 27 angeordnet. Durch Anziehen der Spannschraube 26 wird die über den Verlängerungsbolzen 28 auf das Fräswerkzeug 30 übertragene Spannkraft und damit die zur Verdrehsicherung des Fräswerkzeuges 30 im Halterungsteil 36 erforderliche Reibungskraft zwischen dem konischen Uebergangsteil 20 und dem Konusteil 36 eingestellt.

Zur Fixierung der Verlängerungshülse während dem Eindrehen der Spannschraube 26 sind am Verlängerungsteil 12 zwei einander gegenüberstehende Hilfsbohrungen 24 als Widerlager angeordnet.

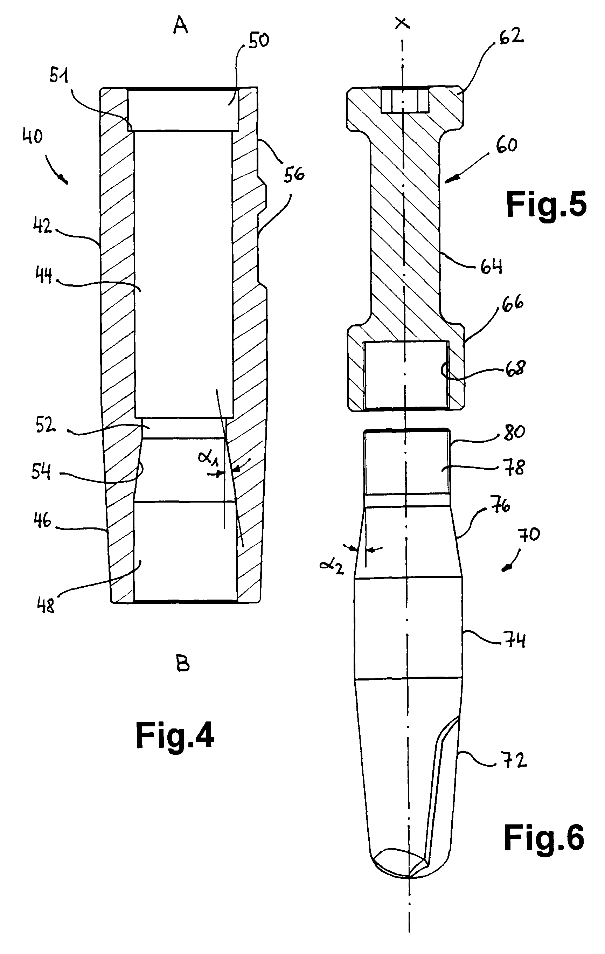

In Fig. 4 bis 6 ist eine weitere Verlängerungsmöglichkeit für ein Fräswerkzeug dargestellt.

Eine Verlängerungshülse 40 weist -- wie die Verlängerungshülse 10 von Fig. 1 -- einen Verlängerungsteil 42 sowie einen Halterungsteil 46 mit entsprechenden zylinderförmigen Bohrungen 44 bzw. 48 auf. Am freien Ende des Verlängerungsteils 42 ist eine gegenüber der Bohrung 44 erweiterte Aufnahmebohrung 50 unter Bildung einer ringförmigen Auflagefläche 51 angeordnet. An die Bohrung 48 im Halterungsteil 46 schliesst ein gegen den Verlängerungsteil 42 konisch sich verjüngender Uebergangsteil 54 mit anschliessender Uebergangsbohrung 52 zur Bohrung 44 an. Am Verlängerungsteil 42 sind Spann- bzw. Mitnehmerflächen 56 zum Einspannen der Verlängerungshülse 40 in die Spindel einer Bearbeitungsmaschine vorgesehen.

Ein zur Verlängerungshülse von Fig. 4 passendes Fräswerkzeug 70 weist entsprechend dem in Fig. 2 gezeigten Fräswerkzeug einen Frästeil 72 mit Schaft 74 auf. Der Schaft 74 geht über einen Konusteil 76 in einen endständigen Schraubanschluss 78 mit Aussengewinde 80 über. Beim Zusammenbau des Fräswerkzeuges 70 mit der Verlängerungshülse 40 wird der Schaft 74 mit Konusteil 76 und Schraubanschluss 78 von der Werkzeughalterseite B bis zum Passitz mit der Bohrung 48 und dem konischen Uebergangsteil 54 in den Halterungsteil 46 eingeführt.

Von der Maschineneinspannseite A der Verlängerungshülse 40 wird eine in Fig. 5 gezeigte Passdehnschraube 60 in die Bohrung 44 des Verlängerungsteils 42 eingeführt. Hierbei liegt der in der Aufnahmebohrung 50 versenkte Schraubenkopf 62 der ringförmigen Auflagefläche 51 als Gegenanschlagfläche an. Der Schraubenschaft 64 ist an seinem freien Ende zu einem Anschlussteil 66 mit Innengewinde 68 erweitert. Ueber die beiden Gewinde 68, 80 werden Passdehnschraube 60 und Fräswerkzeug 30 miteinander verschraubt.

Durch Anziehen der Passdehnschraube 60 wird die Spannkraft und damit auch die Reibkraft zwischen dem Konusteil 76 und dem diesem anliegenden konischen Uebergangsteil 54 auf den gewünschten Wert eingestellt.

Sowohl in der Ausführungsform nach Fig. 1 bis 3 als auch bei der in Fig. 4 bis 6 dargestellten Variante wird die verdrehsichere Fixierung des Fräswerkzeugs in der Verlängerungshülse über die kraftschlüssige Verbindung zweier gegeneinander verspannter Konusflächen erreicht. Die erforderliche Spann- bzw. Reibkraft wird im einen Fall über einen durch die Spannschraube 26 erzeugten Druck aufgebracht. Im anderen Fall wird über die Passdehnschraube 60 eine entsprechende Zugkrafterzeugt.

## Patentansprüche

1. Verlängerungshülse für ein Bearbeitungswerkzeug zum Einspannen in eine Spindel einer Bearbeitungsmaschine, mit einem über einen Schaft in die Hülse einsetzbaren Bearbeitungswerkzeug (30,70), wobei der Schaft (34,74) von einem Halterungsteil (16,46) der Hülse (10,40) übergreifbar und in dieser verdrehsicher fixierbar ist,
dadurch gekennzeichnet, dass
der Halterungsteil (16,46) und der Schaft (34,74) je eine symmetrisch zur Hülsen- bzw. Schaftachse (x) liegende konische Fläche (20,36; 54,76) aufweisen und die konischen Flächen mittels einer in Achsenrichtung (x) wirkenden Schraube (26,60) unter Ausbildung einer Reibschlussverbindung gegeneinander verspannbar sind.

2. Verlängerungshülse nach Anspruch 1, dadurch gekennzeichnet, dass die konischen Flächen (20,36;54,76) über eine Federkraft gegeneinander verspannbar sind.

3. Verlängerungshülse nach Anspruch 2, dadurch gekennzeichnet, dass die Federkraft durch die Ausgestaltung der Schraube (26,30) oder durch ein integral angeformtes oder ein separat angeordnetes Federelement erzeugbar ist.

4. Verlängerungshülse nach einem der Ansprüche 1 bis 3, dadurch gekennzeichnet, dass die konischen Flächen (20,36) gegen die Werkzeughalterseite (B) der Hülse (10) zulaufen und die Reibschlussverbindung über eine von der Maschineneinspannseite (A) in die Hülse einschraubbare Spannschraube (26) erzeugbar ist.

5. Verlängerungshülse nach Anspruch 4, dadurch gekennzeichnet, dass zur Kraftübertragung auf das Bearbeitungswerkzeug (30) zwischen Spannschraube (26) und Schaft (34) ein Verlängerungsbolzen (28) in die Hülse (10) einsetzbar ist.

6. Verlängerungshülse nach Anspruch 4 oder 5, dadurch gekennzeichnet, dass zwischen Spannschraube (26) und Schaft (34) mindestens ein Federelement (27), vorzugsweise mindestens eine Hochspannungssicherungsscheibe oder Tellerfeder, in die Hülse (10) einsetzbar ist.

7. Verlängerungshülse nach einem der Ansprüche 1 bis 3, dadurch gekennzeichnet, dass die konischen Flächen (54,76) gegen die Maschineneinspannseite (B) der Hülse (40) zulaufen und die Reibschlussverbindung über eine mit dem Schaft (74) verschraubbare und auf der Maschineneinspannseite (B) an der Hülse (40) gegenlagerbare Schraube (60), insbesondere eine Dehnschraube, erzeugbar ist.

8. Verlängerungshülse nach Anspruch 7, dadurch gekennzeichnet, dass zwischen Schraube (60) und einer Auflagefläche (51) in der Hülse (40) mindestens ein Federelement einsetzbar ist.

9. Verlängerungshülse nach einem der Ansprüche 1 bis 8, dadurch gekennzeichnet, dass die konischen Flächen (20,36;54,76) mit der Hülsen- bzw. Schaftachse (x) einen Winkel (α₁, α₂) von 1 bis 90°, insbesondere 5 bis 15°, bilden.

10. Verwendung einer Verlängerung nach einem der Ansprüche 1 bis 9 zum Einspannen von Fräsern, Bohrern, Gewindeschneidern und dgl. in eine Spindel einer Bearbeitungsmaschine.
